# EUROPEAN PATENT SPECIFICATION

(11) **EP 1 437 019 B1**
(45) Date of publication and mention of the grant of the patent: **30.06.2010**
(21) Application number: 02736804.2
(22) Date of filing: 24.05.2002
(51) Int. Cl.: H04W 92/12

(54) **WIRELESS NETWORK SYSTEM SOFTWARE PROTOCOL**
SOFTWAREPROTOKOLL FÜR EIN DRAHTLOSES NETZWERKSYSTEM
PROTOCOLE DE LOGICIEL POUR RESEAU SANS FIL

(30) Priority: 25.05.2001 US 293776 P
(43) Date of publication of application: 14.07.2004
(73) Proprietor: Symbol Technologies, Inc., Holtsville, NY 11742 (US)
(72) Inventor: REYNOLDS, Russell, R., Los Gatos, CA 95033 (US); PENG, Terry, L., Redwood City, CA 94065 (US)
(74) Representative: Maiwald Patentanwalts GmbH
(86) International application number: PCT/US2002/015144
(87) International publication number: WO 2002/097560

(56) References cited:
- EP-A- 0 917 320
- EP-A- 1 098 490
- WO-A-00/68824
- US-A1- 2002 075 844
- US-B1- 6 393 261
- US-B1- 6 400 722
- US-B1- 6 414 950

## Description

### Background of the Invention

Wireless Local Area Networks (LANs) have become more and more popular. Typically, in a wireless LAN, wireless devices interact using wireless signals with access points connected to the LAN. The LAN forwards information from the wireless devices to additional elements in the system. The wireless LAN allows the wireless devices, such as a portable computer or other communication device, to roam around the office or home, interacting with the wireless LAN.

It is desired to have an improved wireless LAN software protocol that improves the operation of a wireless LAN.

EP 0 917 320 A2 relates to an optimum routing system. The wireless data network therein includes a wireless packet switch data network for end users that divides mobility management into local micro, macro and global connection handover categories. There is a home network including a home mobile switching centre with a home registration server and the home-inter-working function. A registration request is sent to a servicing registration server. The servicing registration server includes a first module to process the registration request and to determine an optimum route between desired communication service and one of the home inter-working function and the serving interworking function.

EP 1 098 490 A2 discloses an architecture for an IP centre distributed network. The system uses the application layer to send messages between the access layer and the IP network. The access layer also includes distributed IP based functionality and the flexibility to be incorporated into distributed service on a local area network. The access layer also includes the capability to support establishing and maintaining the wireless link and mobility services to the mobile station through the access layers along with simultaneous IP access to public domain services. The access layer also handles connection management independent from the hardware used.

WO 00/68824 discloses methods and systems for managing a network using a handheld communication device. Such a network management method includes the steps of accessing a page containing network management information stored on a Palm-sized computer, selecting indicating a network management function to be performed, connecting to a synchronization server, transmitting the selected or indicated function and receiving updated network management information responsive to the selected function.

### Summary of the Invention

The present invention comprises a software protocol for a wireless LAN system. When an access point is first connected to a wireless LAN, the access point sends a request to a master wireless communication server connected to the wireless LAN. The master wireless communication server assigns a selected wireless communication server from the group of wireless communication servers connected to the wireless LAN for that access point. Thereafter, communications are tunneled between the access point and the selected wireless communication server.

This protocol allows the communications between the access points in the remainder of the wireless LAN to be spread among the wireless communication servers for the system. The access points, when connected to the wireless LAN, can automatically interact with the communication servers without requiring a technician to adjust the access point.

Additional protocols include choosing which of the wireless communications servers is the master. In one embodiment, the first wireless communication server connected to the wireless LAN calls itself the master and the protocol deals with any conflicts between wireless communication servers who consider themselves to be the master. Other protocols include a management protocol to allow the management of the wireless communication server.

### Brief Description of the Drawing Figures

Fig. 1 is a diagram illustrating a wireless LAN system.

Fig. 2 is a diagram illustrating a wireless LAN system which shows the association of the access point with a wireless communication server connected to the wireless LAN.

Fig. 3 is a diagram that illustrates the signaling for the selection of a wireless communication server to tunnel communications from an access point.

Fig. 4 is a state diagram illustrating the possible access point states in the system of the present invention.

Fig. 5 is a state diagram illustrating the states of the wireless communication servers that can be placed in for the system of the present invention.

### Detailed Description of the Invention

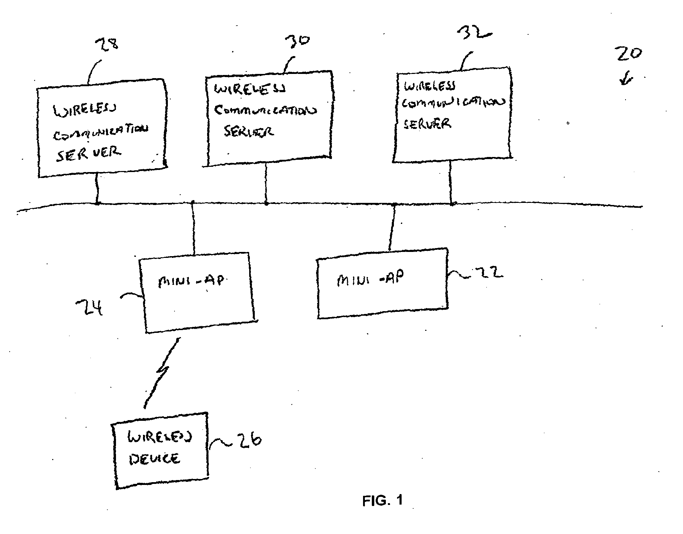

Fig. 1 is a diagram of a wireless LAN system 20. In this wireless LAN system are shown access points (Mini-APs) 22 and 24. The Mini-AP 24 interacts with the wireless device 26. The wireless device 26 sends wireless signals to the Mini-AP 24. The Mini-AP 24 then sends a signal to a desired wireless communication server 28, 30 or 32. Details of the wireless communication server for use with the present invention is described within the parent application No. 09/457,624, which is incorporated herein by reference. As described in that application, the access points 24 and 22 are called Mini-APs because they are reduced functionality access points.

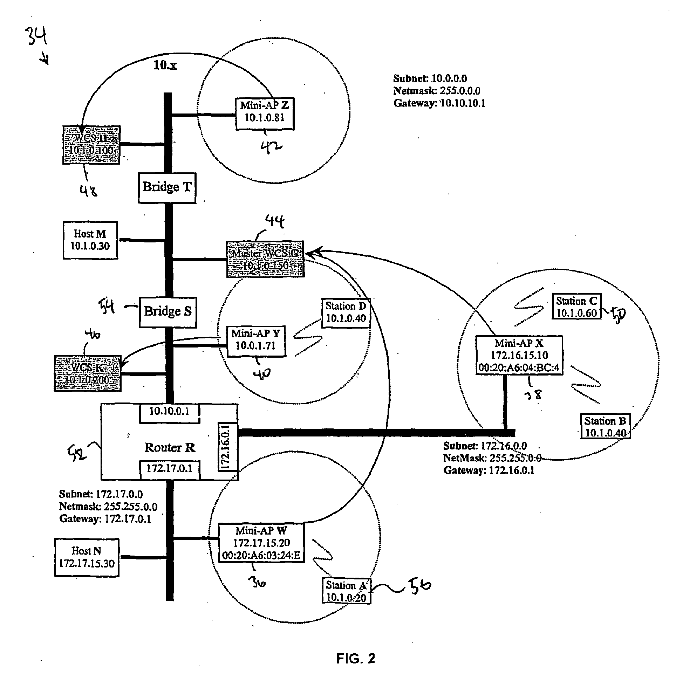

Fig. 2 is a diagram that illustrates the wireless LAN system 34. In the wireless LAN system 34, the access points 36, 40, 38 and 42 interact with the master wireless communication server 44. The master wireless communication server indicates which of the wireless communication servers, connected to the wireless LAN 34 are to be used for each of the access points. For example, the access point 36 is assigned the wireless communication server 44. Access point 38 is assigned the wireless communication server 44. Access point 40 is assigned the wireless communication server 46. Access point 42 is assigned the wireless communication server 48. Communications between the access points and the wireless communication server is preferably done by tunneling. The tunneling method allows the data to be encapsulated using a general LAN protocol (like TCP/IP or UDP/IP) not proprietary to the access points. For example, the data between the station and an access point, such as the data between station 50 and the access point 38 is encapsulated at the access point 38, then sent to the wireless communication server 44. The other elements on the wireless LAN, such as the router 52 and bridge 54 don't need to know the details of the communication between the station 50 and the access point 38 to forward the packet. The encapsulated data is preferably an IP packet, using the wireless communication server 44 address as the destination address and the application point 38 address as the sendor address. The wireless communication server 44 strips away the encapsulation and interprets the data to be sent onto other elements in the wireless LAN or beyond. For example, if the data from station 50 is a communication to be sent to station 56, access point 38 encapsulates the data and sends it to the wireless communication server 44. Wireless communication server 44 directs the data to the access point 36, which then sends it the station 56. Note that the tunneling allows much of the intelligence of the network to be located in the wireless communication servers, the access points can blindly transfer data to the specific wireless communication server, without needing to know the actual location of the eventual destinations. Furthermore, data coming into the wireless LAN, for example for station 50, is sent to the wireless communication server associated with the access point for the station.

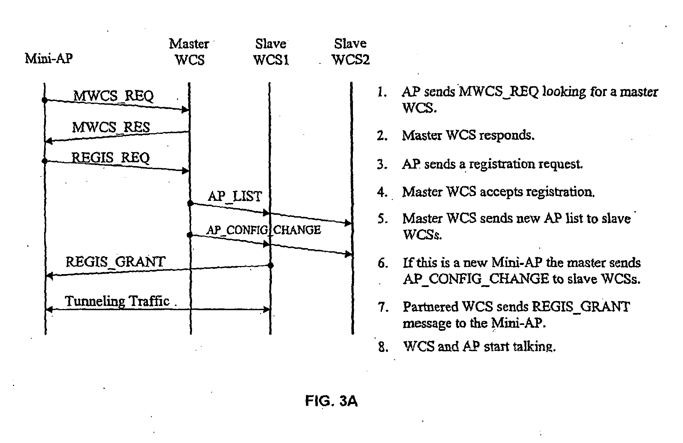

Fig. 3A illustrates the communication system of the present invention. In step 1, the access point sends a request looking for the master wireless communication server onto the wireless LAN. In step 2, the master wireless communication server responds to the access point. In step 3, the access point sends a registration request to the master wireless communication server. In step 4, the master wireless communication server accepts the registration. In step 5, the master wireless communication server sends the updated access point list to the slave wireless communication server. The slave wireless communication server being all wireless communication servers on the wireless LAN, other than the master wireless communication server. In step 6, if the access point is a new access point, the master sends out an application point configuration change signal to the slave wireless communication server. In step 7, the wireless communication server associated with the application point sends a registration granted message to the application point. In step 8, the wireless communication server and application point can interact through tunneling.

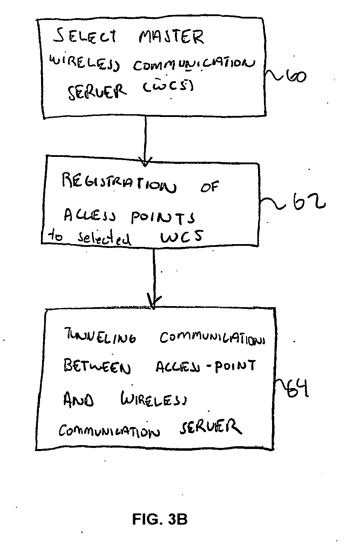

Fig. 3B is a flow chart that illustrates the operation of the system of the present invention. In step 60, the master wireless communication server is selected. In step 62, the access point is registered to a selected wireless communication server. In step 64, the tunneling communication between the access points tunnels data to the wireless communication server.

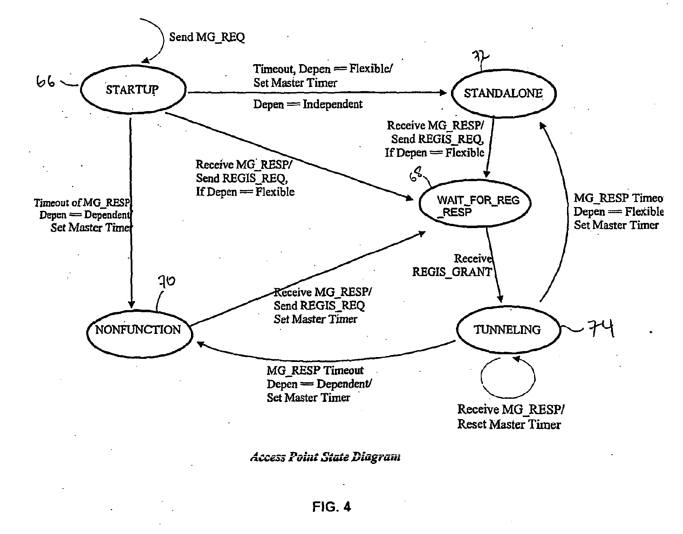

Fig. 4 illustrates a state diagram for an access point. The access point begins in the start-up state 66. The access point sends out a request onto the LAN looking for the master wireless communication server. If it receives an indication of the wireless communication server, the system will send a request for the associated wireless communication server, then go into state 68, to waiting for the registration request. If the signal sent for the master wireless communication server has not responded, depending upon whether the dependency (dependent or independent), the access point is sent to the non-functional or stand alone mode. From the waiting for registration mode 68, the access point can go into the tunneling mode 74, in which the communications are set between the access point and the associated wireless communication server. Once communications are finished, the system will move back to the stand alone 72 or non-functional mode 70, depending on the dependency which is set for the system.

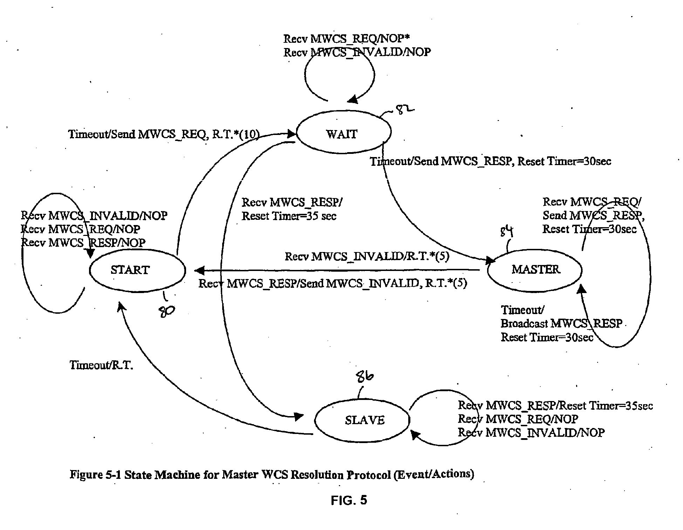

Fig. 5 illustrates a state machine for the wireless communication server. In this example, the system begins in starting mode 80. The other modes shown are the wait mode, in which the system waits to determine whether to go over to the master or slave mode. For example, master mode is mode 84, slave mode is mode 86.

Typically, the wireless communication server that comes up first will be the master. Conflicts are resolved if there are two or more masters. In step 1, after start-up, the wireless communications server will enter the state start-up 66 after randomly initializing the timer between 1 and 30 seconds. The wireless communication server will broadcast a master wireless communication server request, set a time-out, and wait for response. The wireless communication server will become a slave if it receives any wireless communication server response before the time-out. In step 4, the wireless communication server will become a master if it doesn't receive any wireless communication server response before the time-out. The master wireless communication server will broadcast its status using a wireless communication server response packet every 30 seconds. If the master wireless communication server receives any request, it will broadcasts a master wireless communication server response immediately and re-set the timer to 30 seconds. The slave will set the timer to 35 seconds, whenever it hears the status update from the master. If it times-out, the master must be gone, so it enters the start state 66 to compete for the master state 70. If there are two or more masters, then a master wireless communication server invalid packet is used to re-set the state for all the masters and start the competition over again. The slaves won't participate in the computation of the master role after receiving a master wireless communication invalid packet. Only conflicting masters will compete for the real master role. In step 8, the time-out of the slave, the 35 seconds, is a little bit longer than the time-out of the master 30 seconds, in case there's a delay, while the master broadcasts its status.

The architecture is designed to centralize the filtering authorization and network management functionality in the wireless communication server from multiple application servers. It's designed to allow access points to be deployed in more than one router segment, while still supporting roaming around the access points. In order to achieve the goals, the data going to and from the wireless devices are sent through the wireless communication server. This is done through data tunneling or encapsulation. In one embodiment, the encapsulation or tunneling is done using UDP/IP to send the signals along the wireless LAN. Both the access points and the wireless communication servers preferably implement fragmentation to break down to long data.

In the preferred embodiment, the wireless communication servers also implement a management protocol for controlling the system remotely.

Appendix A contains details of one embodiment of a wireless communication server access point software protocol.

It will be appreciated by those of ordinary skill in the art that the invention can be implemented in other specific forms. The presently disclosed embodiments are therefore considered in all respects to be illustrative and not restrictive. The scope of the invention is illustrated by the appended claims rather than the foregoing description, and all changes that come within the meaning and range of equivalents thereof are intended to be embraced herein.

## Claims

1. A method comprising:
in an access-point (36, 40, 38, 42), automatically sending a registration request to a master wireless communication server (44) within a set of wireless communication servers (48, 46) connected to a wireless LAN (34);
in the master wireless communication server (44), automatically assigning a selected wireless communication server (46, 48) from the set of wireless communication servers for the access-point (36, 40, 38, 42); and
tunneling data communications automatically between the access point (36, 40, 38, 42)and the selected wireless communication server (46, 48).

2. The method of Claim 1 wherein the tunneling between the access point (36, 40, 38, 42) and the selected wireless communication server (46, 48) is implemented by encapsulating the first communication packet into a communication packet directed to the selected wireless communication server (46, 48).

3. The method of Claim 1 wherein the wireless communication server (48, 46, 44) stores status information.

4. The method of Claim 3 wherein the status information includes an access point list indicating the associations between the access points (36, 40, 38, 42) and the wireless communication servers (44, 46, 48).

5. The method of Claim 1 wherein after a selected wireless communication server (48, 46, 44) is assigned to an access point (36, 40, 38, 42), the selected wireless communication server sends a message to the access point indicating that the registration for the access point is granted.

6. The method of Claim 1 further comprising in the wireless communication server, connected to the wireless LAN (34), selecting a master wireless communication server from the wireless communication servers (44, 46, 48) connected to the LAN.

7. The method of Claim 1 wherein the wireless communication server implements a management protocol.

## Patentansprüche

1. Verfahren, welches das Folgende umfasst:
automatisches Senden einer Registrierungsanfrage an einen Haupt-Server (44) für drahtlose Kommunikation aus einer Gruppe von Servern (48, 46) für drahtlose Kommunikation, die an ein drahtloses LAN (34) angeschlossen sind, in einem Zugangspunkt (36, 40, 38, 42);
automatisches Zuweisen eines ausgewählten Servers (46, 48) für drahtlose Kommunikation aus der Gruppe von Servern für drahtlose Kommunikation für den Zugangspunkt (36, 40, 38, 42) in dem Haupt-Server (44) für drahtlose Kommunikation; und
automatisches Tunneln von Datenkommunikationsvorgängen zwischen dem Zugangspunkt (36, 40, 38, 42) und dem ausgewählten Server (46, 48) für drahtlose Kommunikation.

2. Verfahren nach Anspruch 1, wobei das Tunneln zwischen dem Zugangspunkt (36, 40, 38, 42) und dem ausgewählten Server (46, 48) für drahtlose Kommunikation durch Verkapselung des ersten Kommunikationspakets in einem Kommunikationspaket realisiert wird, das an den ausgewählten Server (46, 48) für drahtlose Kommunikation gerichtet ist.

3. Verfahren nach Anspruch 1, wobei der Server (48, 46, 44) für drahtlose Kommunikation Statusinformationen speichert.

4. Verfahren nach Anspruch 3, wobei die Statusinformationen eine Zugangspunktliste umfassen, in welcher die Verbindungen zwischen den Zugangspunkten (36, 40, 38, 42) und den Servern (44, 46, 48) für drahtlose Kommunikation angezeigt werden.

5. Verfahren nach Anspruch 1, wobei, nachdem ein ausgewählter Server (48, 46, 44) für drahtlose Kommunikation einem Zugangspunkt (36, 40, 38, 42) zugewiesen ist, der ausgewählte Server für drahtlose Kommunikation eine Mitteilung an den Zugangspunkt sendet, welche anzeigt, dass die Registrierung für den Zugangspunkt gewährt ist.

6. Verfahren nach Anspruch 1, welches in dem Server für drahtlose Kommunikation, der an das drahtlose LAN (34) angeschlossen ist, ferner ein Auswählen eines Haupt-Servers für drahtlose Kommunikation aus den Servern (44, 46, 48) für drahtlose Kommunikation, die an das LAN angeschlossen sind, umfasst.

7. Verfahren nach Anspruch 1, wobei der Server für drahtlose Kommunikation ein Verwaltungsprotokoll ausführt.

## Revendications

1. Procédé comprenant :
dans un point d'accès (36, 40, 38, 42), l'envoi automatique d'une demande d'enregistrement à un serveur de communication sans fil maître (44) dans un ensemble de serveurs de communication sans fil (48, 46) connectés à un réseau local sans fil (34) ;
dans le serveur de communication sans fil maître (44), l'affectation automatique d'un serveur de communication sans fil sélectionné (46, 48) parmi l'ensemble de serveurs de communication sans fil au point d'accès (36, 40, 38, 42) ; et
la tunnellisation des communications de données automatiquement entre le point d'accès (36, 40, 38, 42) et le serveur de communication sans fil sélectionné (46, 48).

2. Procédé selon la revendication 1, dans lequel la tunnellisation entre le point d'accès (36, 40, 38, 42) et le serveur de communication sans fil sélectionné (46, 48) est mise en oeuvre en encapsulant le premier paquet de communication dans un paquet de communication dirigé vers le serveur de communication sans fil sélectionné (46, 48).

3. Procédé selon la revendication 1, dans lequel le serveur de communication sans fil (48, 46, 44) stocke des informations d'état.

4. Procédé selon la revendication 3, dans lequel les informations d'état comprennent une liste de points d'accès indiquant les associations entre les points d'accès (36, 40, 38, 42) et les serveurs de communication sans fil (44, 46, 48).

5. Procédé selon la revendication 1, dans lequel après l'affectation d'un serveur de communication sans fil sélectionné (48, 46, 44) à un point d'accès (36, 40, 38, 42), le serveur de communication sans fil sélectionné envoie un message au point d'accès indiquant que l'enregistrement pour le point d'accès est accordé.

6. Procédé selon la revendication 1, comprenant en outre dans le serveur de communication sans fil, connecté au réseau local sans fil (34), la sélection d'un serveur de communication sans fil maître parmi les serveurs de communication sans fil (44, 46, 48) connectés au réseau local.

7. Procédé selon la revendication 1, dans lequel le serveur de communication sans fil met en oeuvre un protocole de gestion.
